**Europäisches Patentamt**

**European Patent Office**

**Office européen des brevets**

(19)

(11) Veröffentlichungsnummer : **0 246 588 B1**

(12) # EUROPÄISCHE PATENTSCHRIFT

(45) Veröffentlichungstag der Patentschrift :
11.09.91 Patentblatt 91/37

(51) Int. Cl.$^5$ : **D21J 1/00, C08L 97/02**

(21) Anmeldenummer : **87107143.7**

(22) Anmeldetag : **18.05.87**

(54) **Verfahren zur Herstellung leichter, bindemittelfreier und umweltfreundlicher Formkörper aus lignozellulosehaltigem Material.**

Die Akte enthält technische Angaben, die nach dem Eingang der Anmeldung eingereicht wurden und die nicht in dieser Patentschrift enthalten sind.

(30) Priorität : **20.05.86 DE 3616885**

(43) Veröffentlichungstag der Anmeldung :
**25.11.87 Patentblatt 87/48**

(45) Bekanntmachung des Hinweises auf die Patenterteilung :
**11.09.91 Patentblatt 91/37**

(84) Benannte Vertragsstaaten :
**AT BE CH DE FR GB IT LI LU NL SE**

(56) Entgegenhaltungen :
**AT-B- 170 271**
**AT-B- 178 203**
**DE-C- 1 060 179**

(73) Patentinhaber : **Grohmann, Peter**
**Josefstrasse 21**
**W-5042 Erftstadt-Kierdorf (DE)**

(72) Erfinder : **Grohmann, Peter**
**Josefstrasse 21**
**W-5041 Erftstadt-Kierdorf (DE)**
Erfinder : **Eisteistein, Rubin, Dr.**
**Jülicher Strasse 336**
**W-5100 Aachen (DE)**
Erfinder : **Gehring, Gerhard, Dr.**
**Prinzregentenstrasse 66**
**W-8000 München 80 (DE)**

(74) Vertreter : **von Kreisler, Alek et al**
**Patentanwälte Von**
**Kreisler-Selting-Werner-Schönwald-Fues-Dallm**
**Deichmannhaus**
**W-5000 Köln 1 (DE)**

## Beschreibung

Die Erfindung bezieht sich auf ein Verfahren zur Herstellung leichter, bindemittelfreier und umweltfreundlicher Formkörper aus lignozellulosehaltigem Material. Derartige Formkörper können eingesetzt werden für den Bindereibedarf, beispielsweise zur Herstellung von Kränzen, Kugeln, Kreuzen, Kissen und dergleichen, zum Binden von Kränzen, beispielsweise Friedhofs- und Adventskränzen usw. Weiterhin lassen sich derartige Formkörper im Bereich der Verpackungsindustrie einsetzen. Darüberhinaus kann man aus derartigen Formkörpern Möbelteile, insbesondere speziell und in beliebiger dreidimensionaler Form vorliegende, einen gewissen Innenquerschnitt aufweisende Möbelteile fertigen. Schließlich sind die Formkörper auch für den Baudedarf geeignet, beispielsweise in Form von Isolierstoffplatten, Bauplatten und dergleichen.

Derartige Formteile werden heute häufig aus einem Kunstschaumstoff gefertigt, beispielsweise aus einem Hartschaum. So sind für das Binden von Kränzen Ringe aus Styropor bekannt. Derselbe Schaumstoff wird auch für Verpackungen und in der Baustoffindustrie eingesetzt.

Ein Problem bei diesen vorbekannten Formkörpern ist die Abfallbeseitigung. Die bekannten Formkörper lassen sich praktisch nicht zersetzen, sie verrotten auch nicht. Andererseits nehmen sie ein erhebliches Volumen ein. Problematisch ist auch ihr Brandverhalten. Sollen sie zur Abfallbeseitigung verbrannt werden, so fallen beim Verbrennen Schadstoffe an. Dasselbe Problem tritt auch auf, wenn die bekannten Formkörper ungewollt oder an ungeeignetem Ort verbrannt werden.

Bei Formkörpern für den Bindereibedarf werden Pflanzen und andere schmückende Teile mit Hilfe eines Drahtes oder einer Schnur aufgebunden, teilweise werben sie aber auch in das Formteil eingesteckt. Die Formteile müssen daher einerseits eine genügend hohe Festigkeit zur Handhabung aufweisen, andererseits sollen aber Befestigungsklammern, Zweige und dergleichen ohne Schwierigkeiten manuell und ohne zusätzliches Werkzeug eingedrückt werden können. Es muß also beispielsweise möglich sein, einen Zweig in den Formkörper einzustechen.

Bei Möbeln sollen die Formkörper eine beliebige Gestalt aufweisen können und eine für den Gebrauch ausreichende Festigkeit haben. Ihre Oberfläche kann in irgend einer Form veredelt werden, beispielsweise durch Aufbringen einer Kunststoffschicht, eines Lacks oder dergleichen, wodurch die Oberfläche gegen mechanische Eingriffe geschützt wird.

Bei Verpackungsmaterial ist erwünscht, daß es einerseits ausgesprochen leicht ist, also ein geringes spezifisches Gewicht aufweist und somit nicht erheblich zu den Frachtkosten beiträgt, andererseits aber billig herzustellen ist, eine ausreichende mechanische Stabilität aufweist, um die verpackten Güter zu schützen und einfach und problemlos zu beseitigen ist. Gerade die letztere Anforderung ist bei Verpackungsmaterial von entscheidender Bedeutung, da derartige Formkörper üblicherweise eine dem zu verpackenden Produkt sehr speziell angepaßte Form haben, so daß sie nach Erfüllung ihrer Verpackungsfunktion im Grunde anderweitig nicht mehr eingesetzt werden können und daher irgendwie vernichtet werden müssen.

Aus der deutschen Patentschrift 898 964 ist ein Verfahren zur Herstellung von Leichtbaustoffen aus Holzabfällen mit einem geringen Raumgewicht bekannt. Durch Naßverfilzung von langen Holzfasern, wie sie z. B. aus Hackschnitzeln im Defibrator gewonnen werden, wird unter Aufschlämmung in Wasser und Absetzenlassen bzw. Absaugen aus einem wässrigen Brei ein Vlies erhalten. Derartige Vliese haben jedoch ein hohes Raumgewicht, anders ausgedrückt eine zu geringe Porosität.

Aus der deutschen Patentschrift 650 040 ist ein Verfahren zum Herstellen von Formkörpern aus Faserstoffgemischen bekannt, bei dem aus schwach verholzten Pflanzenfasern, beispielsweise Stroh, durch Kochen mit Alkalimonosulfiten ein Zellstoff hergestellt wird, der einem Gemisch von mechanisch schwach aufbereitetem und mechanisch zerfasertem Holz beigemischt wird. Auch dieses Verfahren führt nicht zu befriedigenden Ergebnissen.

Aus der DE-B-10 60 179 sind Unterlagen für Ansteckblumen bekannt, die aus einer Masse aus Strohfaser oder Strohflor, einem Zusatz von Zellstoff und einem Bindemittel bestehen und mit einem wasserabweisenden Stoff imprägniert sind. Dabei wird das Stroh zu Strohfaser verarbeitet, zur Erhöhung der Festigkeit mit bis zu 10 % Zellstoff versetzt, grob entfeuchtet und dann mit einem geeigneten Bindemittel versetzt. Diese mit Bindemittel versehene Masse wird in Formen zu Unterlagen gepreßt. Die Preßlinge werden dann anschließend getrocknet. Die so erhaltenen Produkte sind viel zu hart und nicht gut anstechbar, so daß sie sich in der Praxis nicht bewährt haben.

Aus der AT-B 170 271 ist ein Verfahren bekannt zur Herstellung von bindemittelfreien Formkörpern aus Fasermaterial, bei dem aus Einjahrespflanzen zwei verschiedene Produkte gewonnen werden: ein Teil, der aus möglichst gut erhaltenen Faserbündeln bestehen muß und als Gerüstsubstanz dient, und einen zweiten, der weitgehend hydratisiert ist, so daß er als Bindesubstanz wirkt. Es handelt sich somit um ein Produkt, welches in vieler Hinsicht dem der bereits abgehandelten DE-B-10 60 179 entspricht. Selbst der als Gerüstsubstanz dienende Teil der Einjahrespflanzen wird wesentlich stärker zerkleinert als die Strohhäcksel. Als feinfaserige Komponente und Bindemittel dient der zweite, weitgehend hydratisierte, pentosanreiche Anteil dieser Einjahrespflanzen. Die Gemische werden bei hohen Temperaturen nachbehandelt, wodurch die Pentosen, Hexosen, Lignin und Abbauprodukte kondensieren und damit wie ein Bindemittel wirken. Die Behandlung bei hohen Temperaturen findet obendrein bei hohen Drücken statt, so daß schließlich hinreichend wasserfeste, mechanisch feste, nicht verwerfende Faserplatten von hoher Standfestigkeit entstehen (Beispiel 1) bzw. sogar Möbelholzersatzplatten mit hoher Dichte, die man hobeln, fräsen, bohren, nageln und mit Furanharzen leimen und kitten kann.

Aus dem Vergleichsversuch auf Seite 2, Zeilen 53 bis 64 geht sogar hervor, daß es ohne den besonderen Aufschluß eines Teils des Materials nur zu einer Dehydratisierung und Verhornung der Oberfläche kommt, ohne daß stabile Produkte entstehen.

Daß Problem bei der Herstellung von Formkörpern der eingangs gennanten Art besteht im wesentlichen in der Entwässerung der teilweise recht dicken Formkörper unmittelbar nach ihrer Herstellung. Der Entwässerungsvorgang sollte möglichst ohne mechanische Hilfsmittel, beispielsweise Absaugmaschinen, durchgeführt werden und insbesondere nur eine geringe Zeitspanne, beispielsweise weniger als einen Tag, benötigen. Längere Trocknungszeiten führen zu erhöhten Produktionskosten.

Hiervon ausgehend liegt der Erfindung die Aufgabe zugrunde, ein Verfahren zur Herstellung von Formkörpern der eingangs gennanten Art anzugeben, daß die Nachteile der Verfahren nach dem Stand der Technik vermeidet und es ermöglicht, einen einerseits ausreichend festen, mit beliebiger Materialdicke herstellbaren und andererseits ausreichend schnell entwässerbaren Formkörper anzugeben, der zudem noch bei der Abfallbeseitigung umweltfreundlich ist.

Diese Aufgabe wird gelöst durch ein Verfahren mit den Merkmalen des Anspruchs 1.

Nach diesem Verfahren hergestellte Formkörper für den Bindereibedarf können problemlos verbrannt werden, insbesondere zusammen mit dem auf den Formkörpern befindlichen Grün- und Blumenschmuck. Es lassen sich Formkörper beliebiger Größe und Formen preisgünstig herstellen, durch das Maß der Zerkleinerung des Hauptteils des lignozellulosehaltigen Materials wird die Durchlässigkeit (Porosität) des Materials eingestellt. Die Porosität wird so gewählt, daß der Formkörper kleine, durchgehende Kanäle aufweist, also luftdurchlässig ist. Die Kanäle dienen einem möglichst raschen Abführen des bei der Zubereitung anfallenden Wassers und somit einer raschen Trocknung. Die mechanische Stabilität des Formkörpers wird durch die Qualität des defibrierten lignozellulosehaltigen Materials und das Maß der Zerkleinerung des Hauptteils bestimmt. Je höher die Reißfestigkeit des defibrierten Materials ist, umso besser ist auch seine Klebfähigkeit, umso höher also die Festigkeit der Produkte. Je kleiner wiederum der Hauptteil zerkleinert wurde, umso größer ist die Festigkeit. Das spezifische Gewicht der Formkörper wird größer, je kleiner der Hauptteil zerschnitten oder gehäckselt ist und je schlechter die Qualität der verwendeten defibrierten Materials ist. Leichtgewichtige Formkörper können somit dadurch hergestellt werden, daß einerseits ein defibriertes Material mit hoher Reißlänge (z. B. 10.000 m entsprechend 10 cN/tex) verwendet wird, und andererseits der Hauptteil nicht zu stark zerkleinert wird. Dabei muß jedoch die mechanische Festigkeit beachtet werden.

Die Formkörper haben typischerweise ein spezifisches Gewicht von 0,12 bis 0,14 Gramm pro Kubikzentimeter, wobei es keine Schwierigkeiten macht, Formkörper mit höherem Raumgewicht herzustellen. Bei Formkörpern für den Bindereibedarf, die anstechbar sein müssen und bei denen an die mechanische Festigkeit keine hohen Anforderungen gestellt werden, beträgt der Anteil des Hauptteils lignozellulosehaltigen Materials typischerweise 80 %, der Anteil des defibrierten Materials 20 %. Einen Formkörper mit ebenfalls noch geringem Raumgewicht bekommt man bei einem Mischungsverhältnis von 70 % Hauptteil und 30 % defibriertem Material. Wenn man höhere Festigkeiten benötigt, kann das Verhältnis der beiden Anteile bis auf 50 : 50 verschoben werden. Eine höhere Festigkeit kann man auch dadurch erreichen, daß man den Formkörper unmittelbar nach Füllen der Form preßt, beispielsweise sein Volumen auf ein Drittel des ursprünglichen Füllvolumens reduziert. Eine Trocknung bei 120 bis 150 Grad C erhöht die Festigkeit des Formkörpers.

Insbesondere bei großen Formkörpern, aber auch bei Formkörpern, die eine hohe Festigkeit aufweisen müssen, beispielsweise für die Möbelindustrie, kann es sinnvoll sein, die Formstabilität durch einen Schichtaufbau zu erhöhen. Eine Seitenfläche kann nur aus Faserstoff gebildet sein, beispielsweise wird der Boden einer Form mit Faserstoff in geringer Schichthöhe gefüllt und erst darauf das erfindungsgemäße Gemisch aufgenutscht. Darauf muß darauf geachtet werden, daß eine ausreichende Entwässerung noch möglich ist. Für den Bindereibedarf ist ein derartiges Formteil zwar nur noch von einer Seite anstechbar, durch den Schichtaufbau ist aber eine höhere Stabilität erzielt. Sehr vorteilhaft kann es auch sein, die Zwischenschichten im Inneren des Formkörpers auszubilden, insbesondere bei Baustoffplatten bietet es sich an, die oberflächlichen Schichten aus einem relativ reichen Material, beispielsweise aus Faserstoff, zu bilden, die innenliegenden und den größten Teil der Materialdicke bestimmenden Schichten aber aus einer Mischung herzustellen, die einen möglichst geringen Anteil an defibriertem Material hat.

Bei der Herstellung eines Formkörpers für den Bindereibedarf wird Strohhäcksel trocken bis zu einer Länge von 5 Millimeter gehäckselt. Der Faserstoff kann entweder aus Strohhäcksel durch Aufschließen mit Natronlauge und anschließender Defibrierung in einem Defibrator oder Refiner erzeugt werden, oder man verwendet Holzfaserstoff, Holzschliff oder aufgeschlagenes Altpapier. Bei hochwertiger Zellulose (Reißlänge 10.000 m entsprechend 10 cN/tex) genügt eine Zumischung von 20 % an Faserstoff, bei minderwertiger Zellulose (z.B. aus Altpapier) mit einer Reißlänge von 3.000 m (entsprechend 3 cN/tex) muß etwa die dreifache Menge verwendet werden, wodurch sich auch das Raumgewicht erhöht. Eine Zumischung von 20 % der gennanten Faserstoffe ergibt eine mehr oder weniger gleichstarke Festigkeit zur Handhabung, bei genügend leichter Anstechbarkeit des Formteils durch die Befestigungsklammern bzw. durch Zweige mit der Hand. Bei Verwendung von hochwertigem Zellstoff (Reißlänge 10.000 m entsprechend 10 cN/tex) genügt zwar bereits ein Zusatz von 10 % bis 15 % (als defibriertes Material), wegen des hohen Zellstoffpreises ist aber hier der Preis des Produktes ungünstig.

Für die Herstellung eines Formteils für Verpackungszwecke werden beispielsweise 10 kg Stroh eingesetzt. 8 kg wird in einer Häckselmaschine oder einer Schneidmühle (Hammermühle) zerkleinert, so daß typischerweise Häcksel der Länge von 0,5 mm vorliegen. Aus den 2 kg Stroh wird durch Aufschluß mit Natronlauge und anschließendem Defibrieren der für die Bindung benötige Faserstoff gewonnen. Die Bestandteile werden miteinander vermischt und in eine Form gebracht. Da das wasserhaltige Gemisch durchgehende Kanäle hat, geht die Entwässerung recht rasch von statten. Sie ist nach einigen Stunden, spätestens aber innerhalb eines Tages, abgeschlossen. Das so hergestellte Formteil kann oberflächlich geschützt werden, beispielsweise durch Imprägnierung der Oberfläche durch Aufsprühen oder Eintauchen in Wachs, Stearin oder dergleichen.

Für die Herstellung von Möbelteilen, insbesondere mechanisch belasteten Möbelteilen wie Stuhllehnen, Sitzschalen und dergleichen wird der für den Hauptteil bestimmte beil des Ausgangsmaterials sehr fein zerkleinert und mit einem höheren Anteil an Zellstoff (z. B. 40 %) gearbeitet. Die erhaltenen Formkörper werden nach Trocknung mit einem geeigneten Überzug, beispielsweise einer dünnen Schicht eines Kunststoffs, überzogen.

Für Formteile im Baustoffbereich, beispielsweise Trennwände, Türen, aber auch für Möbel, empfiehlt es sich, eine dünne Schicht aus reinem Faserstoff auf allen Oberflächen anzubringen. Dies geschieht vorzugsweise bereits in der Form. Hierbei ist nur darauf zu achten, daß diese Schicht ausreichend wasserdurchlässig ist, so daß eine ausreichend rasche Trocknung erreicht wird.

## Patentansprüche

1. Verfahren zur Herstellung leichter, bindemittelfreier und umweltfreundlicher Formkörper aus lignozellulosehaltigem Material, dadurch gekennzeichnet, daß der Hauptteil des lignozellulosehaltigen Materials Stroh ist, welches trocken bis zu einer Länge von 5 mm, typischerweise von 0,5 mm, zerschnitten oder gehäckselt wird, in dieser Form naß mit dem kleineren Teil eines defibrierten lignozellulosehaltigen Materials gemischt wird und diese Mischung geformt und anschließend getrocknet wird.

2. Verfahren nach Anspruch 1, dadurch gekennzeichnet, daß auch der kleinere Anteil aus Stroh besteht, das mit Natronlauge kalt oder warm aufgeschlossen und anschließend defibriert worden ist.

3. Verfahren nach Anspruch 1, dadurch gekennzeichnet, daß der kleinere Anteil aus defibriertem Holz besteht.

4. Verfahren nach Anspruch 1, dadurch gekennzeichnet, daß der kleinere Anteil aus aufgeschlagenem Altpapier besteht.

5. Verfahren nach Anspruch 1, dadurch gekennzeichnet, daß der kleinere Anteil aus Holzschliff besteht.

6. Verfahren nach Anspruch 1, dadurch gekennzeichnet, daß die Formkörper gegen Spritzwasser voll- oder oberflächenimprägniert werden.

7. Verfahren nach Anspruch 1, dadurch gekennzeichnet, daß die Stabilität der Formkörper durch Bilden einer inneren dünnen Schicht aus reinem Faserstoff erhöht wird.

8. Verfahren nach einem der Ansprüche 1 bis 7 dadurch gekennzeichnet, daß Formkörper für den Bindereibedarf zum Binden von Kränzen und Gestecken, oder Formkörper für den Baustoffbedarf, oder Formkörper für Verpackungszwecke und/oder Formkörper für Möbelteile hergestellt werden.

9. Verfahren nach einem der Ansprüche 1 bis 8 dadurch gekennzeichnet, daß der Formkörper so ausreichend durchlässig (insbesondere luftdurchlässig) ist, daß eine Entwässerung innerhalb mehrerer Stunden erreichbar ist.

## Claims

1. A process for making lightweight, binder-free and environment-compatible shaped articles from material containing lignocellulose, characterized in that major part of the lignocellulose-containing material is straw which in the dry state is cut or chopped to have a length of up to 5 mm, and typically of 0.5 mm, in this form is mixed in the wet state with the minor part of a defibred lignocellulose-containing material, and the resulting mixture is then shaped and subsequently dried.

2. The process according to claim 1, characterized in that the minor part also consists of straw which has been pulped with caustic soda solution in the cold or hot state and subsequently been defibred.

3. The process according to claim 1, characterized in that the minor part consists of defibred wood.

4. The process according to claim 1, characterized in that the minor part consists of waste paper having been broken down.

5. The process according to claim 1, characterized in that the minor part consists of wood pulp.

6. The process according to claim 1, characterized in that the shaped articles are fully impregnated or surface-impregnated against shower water.

7. The process according to claim 1, characterized in that the stability of the shaped articles is increased by forming an inner thin layer of neat fiber material.

8. The process according to anyone of claims 1 through 7, characterized in that there are produced shaped articles for the florist's needs to bind wreaths and floral decorations, or shaped articles for building materials supply, or shaped articles for packaging purposes, and/or shaped articles for pieces of furniture.

9. The process according to anyone of claims 1 through 8, characterized in that the shaped article is sufficiently permeable (and especially permeable to air) so that a dehydration is attainable within several hours.

## Revendications

1. Procédé de fabrication de corps moulés légers, exempts de liant et non polluants, à base de matériau lignocellulosique, caractérisé en ce que le composant principal du matériau lignocellulosique est constitué de paille, qu'on coupe en morceaux ou hache, à l'état sec, jusqu'à une longueur de 5 mm, d'une manière typique à une longueur de 0, 5 mm, qu'on mélange, sous cette forme et mouillée, au composant secondaire formé d'un matériau lignocellulosique défibré, et en ce qu'on moule ce mélange et finalement, on le sèche.

2. Procédé selon la revendication 1, caractérisé en ce que le composant secondaire est constitué aussi de paille, qu'on a désagrégée à froid ou à chaud dans une lessive de soude et finalement, défibrée.

3. Procédé selon la revendication 1, caractérisé en ce que le composant secondaire est constitué de bois défibré.

4. Procédé selon la revendication 1, caractérisé en ce que le composant secondaire est constitué de papier recyclé.

5. Procédé selon la revendication 1, caractérisé en ce que le composant secondaire est constitué de pâte de bois.

6. Procédé selon la revendication 1, caractérisé en ce que les corps moulés sont imprégnés, complètement ou en surface, par projection d'eau.

7. Procédé selon la revendication 1, caractérisé en ce que la stabilité des corps moulés est augmentée par la formation d'une mince couche interne en matière fibreuse pure.

8. Procédé selon l'une des revendications 1 à 7, caractérisé en ce qu'on fabrique des corps moulés destinés à la technique de la confection d'assemblages, pour relier des couronnes et des objets piqués dans lesdits corps moulés, des corps moulés pour les besoins de l'industrie des matériaux de construction, des corps moulés à des fins d'emballage et/ou des corps moulés pour éléments de meubles.

9. Procédé selon l'une des revendications 1 à 8, caractérisé en ce que le corps moulé est suffisamment perméable (en particulier perméable à l'air) pour qu'on puisse obtenir un assèchement en quelques heures.